# EUROPEAN PATENT APPLICATION

(11) **EP 1 217 136 A2**
(43) Date of publication of application: **26.06.2002**
(21) Application number: 01129355.2
(22) Date of filing: 17.12.2001
(51) Int. Cl.: E04B 1/41, F16B 37/04

(54) **Anchoring device for prefabricated concrete components**

(30) Priority: 21.12.2000 IT MI002793
(71) Applicant: Zambelli, Sergio, 24050 Zanica (Bergamo) (IT); Zambelli, Benito, 24050 Zanica (Bergamo) (IT)
(72) Inventor: Zambelli, Sergio, 24050 Zanica (Bergamo) (IT); Zambelli, Benito, 24050 Zanica (Bergamo) (IT)
(74) Representative: Modiano, Guido, Dr.-Ing.

(57) **Abstract**

An anchoring device (1) for prefabricated concrete components comprises an anchoring insert (2), for embedding in the concrete body (3) of a prefabricated component (4) and has a slot (8) in one of its portions, a connecting element (5) provided with a head (14) insertable through the slot (8) and movable to engage or disengage the face (7b) of the anchoring insert (2) lying opposite with respect to the insertion face (7a) by rotation, of the head (14) and elements for locking rotation of the head (14) in the engagement condition. The locking elements (14,18) allow sliding of the connecting element (5), with the head (12) engaged, along the slot (8) with respect to the anchoring insert (2).

## Description

The present invention relates to an anchoring device for prefabricated concrete components, particularly for the bracing of panels in building structures.

Anchoring devices are known which are composed of a slotted insert to be embedded in the body of a concrete component and of a connecting element that can engage the slotted insert and another component to be connected to the component in which the slotted insert is embedded.

The slotted inserts are generally constituted by a contoured plate-like body that generally has a flat portion with a rectangular plan shape and is crossed by an elongated slot. Such plate-like body has, starting from the two sides of the flat portion that are parallel to the longitudinal sides of the slot, two wings that lie substantially perpendicular or at an angle with respect to the flat portion toward the face of the flat portion, termed hereinafter "inner face" for the sake of brevity, that is designed to be directed toward the inside of the component.

A slotted insert of this kind is disclosed for example in US-4,194,333.

Slotted inserts are usually embedded in the body of the prefabricated concrete component so that the face of the flat portion, termed hereinafter "outer face" for the sake of brevity, that is arranged opposite the inner face is flush with one face of the component.

The function of these slotted inserts is to provide engagement points, along the extension of the prefabricated component, for the connecting elements, generally constituted by bolts and plates, which can engage other elements of the building structure, usually other prefabricated concrete components.

The slotted inserts are generally also provided with a box-like body, which is applied to the plate-like body on its side designed to be directed toward the inside of the prefabricated concrete component, so as to define a compartment that is protected by the concrete of the prefabricated component. In most currently commercially available slotted inserts, a nut is preinserted in said compartment, rests on the inner face of the flat portion in the regions located laterally to the longitudinal sides of the slot, and is arranged so that its threaded hole lies at the slot. This nut constitutes the head of the connecting element, which generally has a threaded end that can be screwed into the nut.

In other anchoring devices, the connecting element is constituted by a plate-like element provided with a hammer-like head, which can be inserted in the slot and can engage the slotted insert through a rotation about its own axis through substantially 90°.

Anchoring devices that use a connecting element provided with a threaded stem, to be coupled to the nut provided in the slotted insert, suffer the drawback that correct coupling between the stem of the connecting element and the nut arranged in the slotted insert is entrusted entirely to the skill and care of the operator.

Furthermore, the thread of the connecting element cannot be used to perform connections to other elements of the building structure by direct bolting of said threaded stem, which would also allow to adjust the distance between the two components or elements of the structure mutually connected by means of the anchoring device, since the tightening of a nut on the thread of the connecting element might cause its rotation, reducing its screwing into the nut arranged in the slotted insert.

Anchoring devices that use a plate-like connecting element with a hammer-like head, of the monolithic type, suffer the drawback of having a distinctly lower resistance to stresses.

Furthermore, when using these devices with a plate-like connecting element with a hammer-like head, it is necessary to provide a connection, between the connecting element and the other element or component to be connected to the one provided with said slotted insert, which prevents any possibility of rotation of the hammer-like head inside the slot, so as to avoid accidental disengagement of the connecting element from the slotted insert. For this reason, the connecting element of these devices is generally welded to the other element of the structure to be connected to the component provided with the slotted insert.

The aim of the present invention is to solve the above-mentioned problems, by providing an anchoring device that offers adequate assurances of safety as regards the steadiness of the anchoring, regardless of the skill and care of the installer.

Within this aim, an object of the invention is to provide an anchoring device that allows to adjust in a simple manner the distance between the prefabricated components or elements of the structure in general that are connected by means of the device.

Another object of the invention is to provide an anchoring device which, while ensuring the mutual connection of the elements of the structure that it connects, allows mutual movements, increasing the resistance of the structure to seismic phenomena.

Another object of the invention is to provide a device that is simple to install and can be manufactured at competitive costs.

This aim and these and other objects that will become better apparent hereinafter are achieved by an anchoring device for prefabricated concrete components, particularly for the bracing of panels in building structures, comprising: an anchoring insert, which can be embedded in the concrete body of a prefabricated component and has a slot in one of its portions, and a connecting element provided with a head that can be inserted through said slot and can be moved to engage or disengage the face of said portion of the anchoring insert that lies opposite with respect to the insertion face by way of the rotation, through a preset angle, of said head about an axis that is substantially parallel to the direction of insertion of the head in the slot, characterized in that it comprises means for locking the rotation of said head about said axis when said head is in said engagement condition, said locking means being further suitable to allow the sliding of said connecting element, when said head is in the engagement condition, along said slot with respect to said anchoring insert.

Further characteristics and advantages of the invention will become better apparent from the description of a preferred but not exclusive embodiment of the device according to the invention, illustrated only by way of non-limitative example in the accompanying drawings, wherein:
Figure 1 is a perspective view of a node for connection between two components, provided by means of two anchoring devices according to the invention;
Figure 2 is an exploded perspective view of the node of Figure 1;

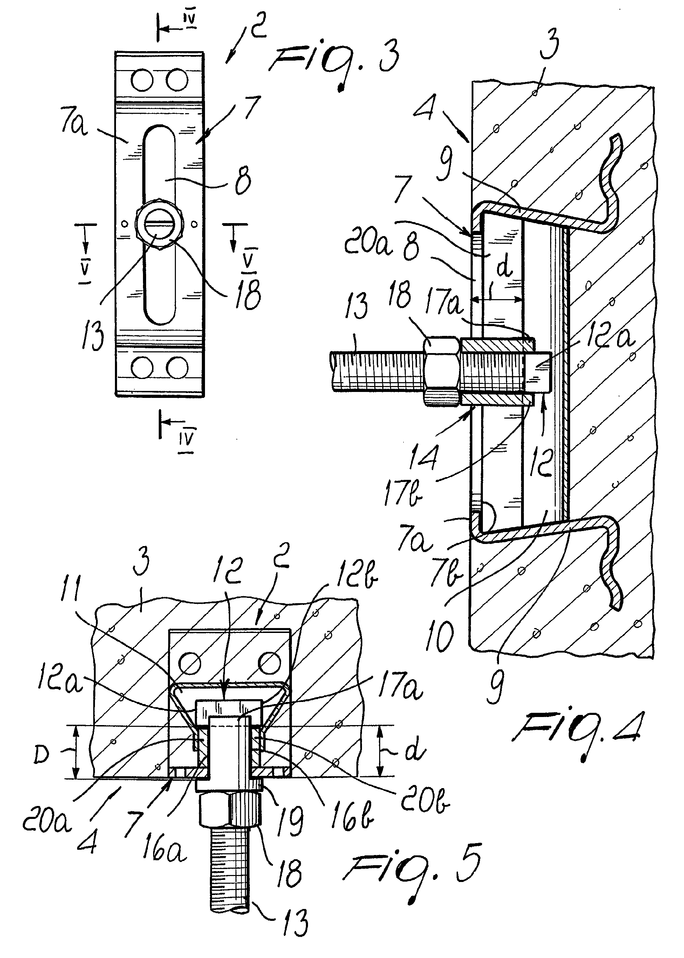

Figure 3 is a front elevation view of the device according to the invention;
Figure 4 is a sectional view of Figure 3, taken along the line IV-IV, with the slotted insert of the device embedded in a prefabricated concrete component;
Figure 5 is a sectional view of Figure 3, taken along the line IV-IV, with the slotted insert of the device embedded in a prefabricated concrete component.

With reference to the figures, the anchoring device according to the invention, generally designated by the reference numeral 1, comprises an anchoring insert 2 made of steel, which is designed to be embedded in the concrete body 3 of a prefabricated component 4, and a connecting element 5, which can engage the anchoring insert 2 and another element of the structure, for example another prefabricated component to be connected to the component 4.

The anchoring insert 2 can be constituted by a known type of slotted insert or, as shown, can be constituted by an anchoring insert with enhanced resistance, which is the subject of a co-pending patent application by the same Applicant.

The anchoring insert 2 has a substantially flat portion 7 in which there is an elongated slot 8. The anchoring insert 2 is designed to be embedded in the concrete body 3 of a prefabricated component 4 so that one face 7a, or outer face, of the portion 7 is arranged substantially flush with one of the faces of the component 4.

The anchoring insert 2 is composed of a main body 9, in which there is the slot 8, and a secondary body 10, which is associated with the main body 9 so as to form, between the inner face 7b that lies opposite the face 7a of the portion 7 and said secondary body 10, a compartment 11 that is protected by the concrete and is designed to accommodate the head 12 of the connecting element 5.

The connecting element 5 has a head 12 that can be inserted through the slot 8 and can be moved into a condition for engaging or disengaging the face 7b, or inner face, that lies opposite the insertion face 7a, or outer face, by way of the rotation, through a preset angle, preferably 90°, of the head 12 about an axis that is parallel to its direction of insertion in the slot 8.

According to the invention, the anchoring device comprises locking means for locking the rotation of the head 12 about said axis when the head 12 is in the engagement condition.

Furthermore, said locking means are suitable to allow the sliding of the connecting element, with its head 12 in the engagement condition, along the slot 8 with respect to the anchoring insert 2.

The connecting element 5 is preferably formed monolithically and made of steel and is constituted by a shaft 13 that ends, at one of its axial ends, with the head 12.

The head 12 is preferably substantially hammer-shaped, with a pair of expansions 12a, 12b that protrude laterally, on opposite sides, with respect to the axis 13a of the shaft 13. The shaft 13 can rotate about its own axis 13a in order to move the head 12 into the insertion or disengagement condition, in which the expansions 12a, 12b are aligned with the longitudinal axis of the slot 8 in order to pass through said slot 8, or into the engagement condition, in which the expansions 12a and 12b are arranged transversely to the longitudinal axis of the slot 8 and face two regions, arranged laterally to the slot 8, of the inner face 7b.

The shaft 13 is threaded at least partially starting from the head 12. Preferably, the shaft 13 is threaded substantially along its entire extension.

The locking means comprise a locking element 14, which can be inserted in the slot 8 and can engage the head 12 in order to rigidly couple, in rotation about the axis 13a, the head 12 and the anchoring insert 2. The locking element 14 preferably has a substantially cylindrical shape and is crossed axially by a hole 15 that can be engaged loosely by the shaft 13. The locking element 14 has, on its lateral surface, in two diametrically opposite regions, two flat portions 16a and 16b that can engage the longitudinal sides of the slot 8.

The locking element 14 rests, with one of its axial ends, against the expansions 12a and 12b of the head 12.

Furthermore, said axial end of the locking element 14 has at least one wing, preferably two wings 17a and 17b, which can engage the sides of the head 12 that lie transversely to the longitudinal extension of the slot 8 when the head 12 is in the engagement condition.

The locking means also comprise a locking nut 18, which can be screwed onto the shaft 13 and can engage the axial end of the locking element 14 that lies opposite the head 12 in order to lock it between the head 12 and said locking nut 18.

Conveniently, the locking element 14 has, proximate to its axial end directed toward the locking nut 18, a collar 19, which is not affected by the flat portions 16a and 16b, so as to rest against the insertion face 7a of the anchoring insert 2. The distance D between the face of the collar 19 that is designed to engage against the insertion face or outer face 7a of the anchoring insert 2 and the face of the head 12 that is designed to be directed toward the opposite face 7b is greater than the distance d between the insertion face or outer face 7a and the regions of the anchoring insert 2 that are designed to face the head 12.

These regions of the anchoring insert 2 can be constituted simply by the face 7b, or by ribs 20a and 20b welded to the face 7b in order to increase the resistance of the portion 7 to deformation.

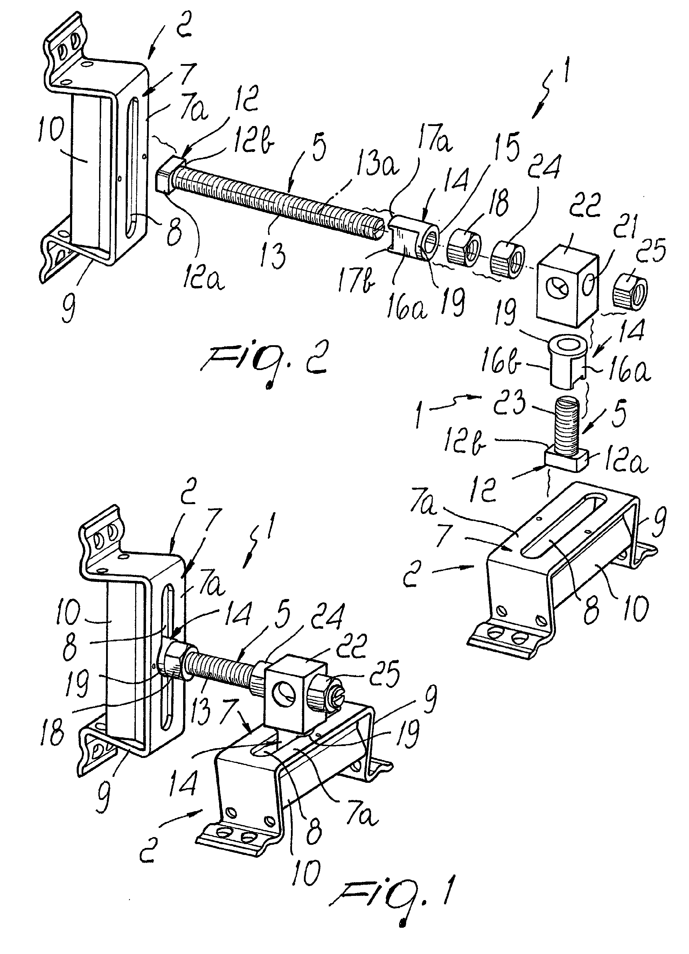

The shaft 13 can be used to provide a connection, preferably by bolting, to other elements of the structure, for example to other similar anchoring devices, as shown in Figures 1 and 2.

In these figures, the shaft 13 of one device is inserted through a through hole 21 formed in a nut 22, which is screwed onto another shaft 23, which is similar to the shaft 13.

It should be noted that by means of a nut 24 and a lock nut 25 it is possible to vary the position of the nut 22 along the shaft 13 and therefore vary the distance between the components or other elements of the structure connected to each other by means of the device according to the invention.

The assembly of the anchoring device according to the invention is as follows.

The head 12 of the shaft 13 is inserted in the slot 8 and then the shaft 13 is turned substantially through 90° about its own axis 13a, so as to move the head 12 into the condition for engagement with the face 7b or rather with the ribs 20a and 20b.

By fitting the locking element 14 on the shaft 13 and locking it axially by means of the locking nut 18, so that the wings 17a and 17b are located on the sides of the expansions 12a and 12b, the rotation of the shaft 13 about its axis 13a is locked.

It should be noted that the above cited condition D > d allows the shaft 13 to slide along the slot 8 without the danger of disengaging from the anchoring insert 2.

The condition D > d also allows the shaft 13 to oscillate on a plane that is parallel to the longitudinal axis of the slot 8 and perpendicular to the insertion face 7a.

By way of the rotational locking of the shaft 13, it is possible to perform without problems, and in full safety, adjustments of the distance between the components connected to each other by means of the device, by acting on the nuts 24 and 25.

In practice it has been found that the anchoring device according to the invention fully achieves the intended aim and objects, since it ensures correct engagement between the anchoring insert and the connecting element regardless of the skill of the installer.

Another advantage of the device according to the invention is that it provides a connection that allows mutual movements between the connected elements and allows to provide structures that have a higher resistance to seismic phenomena.

The anchoring device thus conceived is susceptible of numerous modifications and variations, all of which are within the scope of the appended claims; all the details may further be replaced with other technically equivalent elements.

In practice, the materials employed, as well as the dimensions, may be any according to requirements and to the state of the art.

The disclosures in Italian Patent Application No. MI2000A002793 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An anchoring device for prefabricated concrete components, particularly for the bracing of panels in building structures, comprising: an anchoring insert (2), which can be embedded in the concrete body (3) of a prefabricated component (4) and has a slot (8) in one of its portions, and a connecting element (5) provided with a head (12) that can be inserted through said slot (8) and can be moved to engage or disengage the face (76) of said portion of the anchoring insert that lies opposite with respect to the insertion face (7a) by way of the rotation, through a preset angle, of said head about an axis that is substantially parallel to the direction of insertion of the head (12) in the slot (8), **characterized in that** it comprises means (14,18) for locking the rotation of said head (12) about said axis when said head (12) is in said engagement condition, said locking means (14,18) being further adapted to allow the sliding of said connecting element (5), when said head (12) is in the engagement condition, along said slot (8) with respect to said anchoring insert (2).

2. The anchoring device according to claim 1, **characterized in that** said connecting element (5) comprises a shaft (13) that has, at one of its axial ends, said head (12), which is substantially shaped like a hammer with two expansions (12a,12b) that protrude laterally, on opposite sides, with respect to the axis of said shaft (13); said shaft (13) being rotatable about its own axis in order to move said head (12) from said insertion condition, in which said expansions (12a,12b) of the head (12) are aligned with the longitudinal axis of said slot (8) so as to pass through said slot (8), to said engagement condition, in which said expansions (12a,12b) are arranged transversely to the longitudinal axis of said slot (8) and face two regions, arranged laterally to said slot (8), of the face (7b) of said portion of the anchoring insert (2) that lies opposite its insertion face (7a).

3. The anchoring device according to claims 1 and 2, **characterized in that** said shaft (13) is threaded externally at least proximate to said head (12).

4. The anchoring device according to one or more of the preceding claims, **characterized in that** said locking means comprise a locking element (14) that can be inserted in said slot (8) and can engage said head (12) in order to associate, in rotation about the axis of said shaft (13), said head (12) and said anchoring insert (21).

5. The anchoring device according to one or more of the preceding claims, **characterized in that** said locking element (14) is substantially cylindrical and is crossed axially by a through hole that can be engaged loosely by said shaft (13); said locking element having, on its lateral surface, in two diametrically mutually opposite regions, two flat portions (16a,16b) that can engage the longitudinal sides of said slot (8); said locking element (14) engaging said head (12) with one of its axial ends.

6. The anchoring device according to one or more of the preceding claims, **characterized in that** said axial end of the locking element (14) has at least one wing (17a,17b) that can engage one of the two sides of said head (12) of the connecting element (5) that lie transversely to the longitudinal extension of the slot (8) when said head (12) of the connecting element (5) is in the engagement condition.

7. The anchoring device according to one or more of the preceding claims, **characterized in that** said axial end of the locking element (14) has two wings (17a,17b) that can engage the sides of said head (12) of the connecting element (5) that lie transversely to the longitudinal extension of the slot (8) when said head (12) of the connecting element (5) is in the engagement condition.

8. The anchoring device according to one or more of the preceding claims, **characterized in that** said locking means comprise a locking nut (18) that can be screwed onto said shaft (13) and can engage the other axial end of said locking element (14) for its axial locking between said head (12) and said locking nut (18).

9. The anchoring device according to one or more of the preceding claims, **characterized in that** said locking element (14) has, proximate to its axial end directed toward said locking nut (18), a collar (19) for resting against said insertion face (7a) of said portion of the anchoring insert (2).

10. The anchoring device according to one or more of the preceding claims, **characterized in that** when said locking element (14) is locked axially against said head (12) of the connecting element (5) through the action of said locking nut (18), the distance (D) between the face of said collar (19) that can engage said insertion face (7a) of the anchoring insert (2) and the face of said head (12) that is designed to be directed toward the face (7b) that lies opposite the insertion face (7a) of the anchoring insert (2) is greater than the distance (d) between said insertion face (7a) of the anchoring insert (2) and the regions of the anchoring insert (2) that lie opposite with respect to said insertion face (7a) and are designed to face said head (12).

11. The anchoring device according to one or more of the preceding claims, **characterized in that** said shaft (13) is threaded substantially along its entire extension and can engage other connecting elements (5).
